Europäisches Patentamt

European Patent Office

Office européen des brevets

(19)

(11) Publication number: **0 454 363 A2**

# EUROPEAN PATENT APPLICATION

(12)

(21) Application number: 91303493.0

(51) Int. Cl.⁵: **G06F 1/00**, G06F 3/16

(22) Date of filing: 18.04.91

(30) Priority: 25.04.90 US 514639

(43) Date of publication of application:
30.10.91 Bulletin 91/44

(84) Designated Contracting States:
DE FR GB IT NL

(71) Applicant: AMERICAN TELEPHONE AND
TELEGRAPH COMPANY
550 Madison Avenue
New York, NY 10022 (US)

(72) Inventor: Flanagan, James Loton
26 Wolf Hill Drive
Warren, New Jersey 07060 (US)

(74) Representative: Buckley, Christopher Simon
Thirsk et al
AT&T (UK) LTD. AT&T Intellectual Property
Division 5 Mornington Road
Woodford Green, Essex IG8 OTU (GB)

(54) Voice password-controlled computer security system.

(57) A voice password-controlled computer security system and method of operation for querying a user to provide voice password information and, upon a match thereof with stored voice information for the user, initiating a data connection to a preassigned terminal associated with the identified user.

EP 0 454 363 A2

## Technical Field

This invention relates to computer system security and, in particular, to voice password-controlled computer systems.

## Background of the Invention

In many industries, computers are relied upon to store and process highly sensitive information. The banking industry uses computers to control fund transfers and the dispensing of cash at automated teller machines. The telecommunication industry uses computers to establish call connections around the globe as well as to process associated billing information. Other industries control inventory, generate bills, and control medical instruments all through the use of computers. Naturally, such computers are inviting targets to interlopers -- both the professional variety who seeks access for profit and the so-called "hacker" who purportedly seeks access for fun and glory.

Typically, security in computer systems has been instituted through the use of preassigned passwords. In response to a computer query, a user who supplies the correct password is given access to the computer system, while one who fails to provide the password is not afforded such access. The use of passwords is generally effective, yet is often easily defeated mainly due to human failings. Users, to avoid forgetting their password, sometimes write it down in a convenient place -- like on the back of their automatic teller card or on the terminal itself. Moreover, they often select passwords that are equally obvious: their first or last name, their social security number, their children's name, their home address or their telephone number. Moreover, certain operating systems provide standard passwords (e.g., "install") which should be changed by the System Administrator during the initial installation of the computer system. However, many Systems Administrators fail to change these standard passwords leaving their systems particularly vulnerable. In short, the security of password-controlled systems is often breached because interlopers find passwords or are able to quickly guess passwords with a few intelligent choices.

To help overcome these problems, security in password controlled systems have been augmented by a user-controlled calculator-like device, adapted to execute a secret encryption algorithm. After the computer receives a valid password, it sends a number to the terminal of the user. The user then manually enters this number into the calculator. The calculator then automatically executes the secret algorithm to generate an output number. The user enters the output number and the computer compares this number with a similar number it generates internally using the same algorithm. A match indicates that the user possesses this unique encryption calculator and access to the computer is provided. This system is highly effective, except obviously where the intruder has both the password and the calculator.

Security problems are compounded where computers are networked together. Access to the network itself affords a user the ability to potentially gain access to not just one computer, but often tens or hundreds of computers. To prevent unauthorized users from using the network, access to the network is only provided to users with an additional password called a network security password. This password often comprises randomly chosen numbers and letters, and is changed frequently, such as monthly. Upon entry of the correct network password, the user is asked to identify the computer to be accessed and then has to proceed through the normal login and password procedure before getting access to resources in the identified computer.

The basic problem with all these security systems, however, is that they allow access by a user without ascertaining his or her true identity -- i.e., without establishing some personal uniqueness, such as through fingerprints, DNA criteria or, as in my invention, voice characterisrics.

## Summary of the Invention

The foregoing problem is solved by a voice password-controlled security system. In response to the initiation of a voice connection, a computer queries the user for identification information and, upon ascertaining its validity, queries the user to repeat a selected series of digits or a phrase consisting of a group of words. The computer then compares the voice information received over the voice line with pre-stored voice information associated with an authorized user. If and only if a voice match occurs verifying the identity of the user, the computer initiates the establishment of a data connection to a terminal associated with the identified user.

Due to the high reliability of the voice verification system, intruders, even those with password information and who mimic the user's voice, will usually be precluded access to the computer. A voice verification system is adapted to indicate who spoke in contrast to a speech "recognizer" which ideally indicates what was spoken. Significantly, my verification system is effective yet places no additional burdens on the user, such as memorizing additional codes or carrying encryption devices.

In accordance with an embodiment of the invention, a voice password-controlled computer system, responsive to a telephone call established thereto -- which advantageously may include the use of a toll-free number, first queries a user to provide unique identification information such as a payroll account number or a social security number. This identification information may either be provided verbally by the user and "recognized" by the system or input by the user using a touch-tone pad associated with the telephone. If the received identification matches that of an authorized user of the computer system, the system verbally requests the user to repeat a series of randomly selected digits, such as "one" "seven" "five" "one". Using a voice verification technique, the computer matches received voice information with prestored voice information for the authorized user and generates a confidence recognition factor indicating how closely the received voice matches the stored voice of the authorized user. If the factor exceeds a preset threshold, the user is advised that access will be granted, the voice line is then disconnected, and the computer initiates (or for a networked system causes a computer associated with the user to initiate) a data connection to a prestored number of a terminal associated with the authorized user. The user then uses the terminal to access the computer over the data connection upon successful completion of an additional login and password procedure.

Thus, in accordance with a feature of the invention, a data connection is established only after the user is uniquely identified by voice verification, and the data connection is established only to a prestored destination terminal associated with the identified user.

In accordance with another feature of the invention, the digits or words are chosen at random to prevent an intruder from merely tape recording a prior voice session and playing it back over the voice line to deceive the computer.

## Brief Description of the Drawing

FIG. 1 illustrates in block diagram form, a voice password-controlled computer security system embodying the principles of the instant invention.

FIG. 2 sets forth in greater detail the voice apparatus and programmed processor shown in FIG. 1.

FIGS. 3 and 4 illustrate flow charts of the operation of the system shown in FIG. 1 in accordance with the principles of the invention.

FIG. 5 sets forth an illustrative section of the data base stored in the memory of the program processor shown in FIG. 2.

## Detailed Description

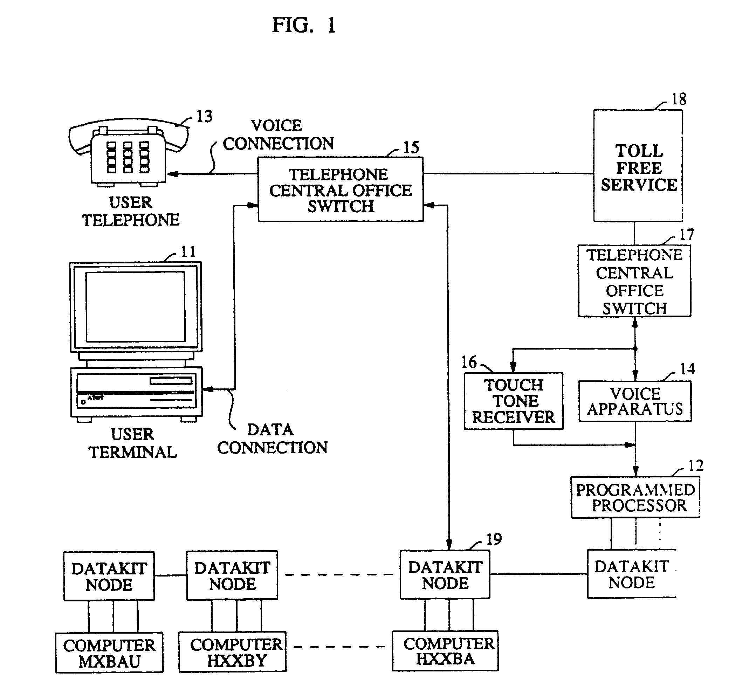

In accordance with the illustrative embodiment of this invention, a user at telephone 13 in FIG. 1 who wishes to use terminal 11 to gain access to a computer, such as HXXBA, must first establish a voice connection to programmed proessor 12. Advantageously, for a large system serving hundreds of users, processor 12 can be reachable using a toll-free number. Thus, after dialing the toll-free number identifying processor 12, a voice telephone connection is established in the usual manner from telephone 13 to processor 12 via telephone central office switches 15 and 17. Box 18 in FIG. 1, designated "toll-free service", is representative of the data base used in the provision of toll-free service and, although involved in the initial table look-up of the actual called number, plays no role beyond that after the voice connection has been established.

Processor 12 is adapted to confirm the identity of a user using voice verification techniques and may be any type of general purpose computer comprising memory, a central processing unit and communication ports through which data connections may be established. In this illustrative embodiment, processor 12 is a 3B2-1000 computer manufactured by AT&T and running the UNIX™ operaring system.

As shown in FIG. 1, processor 12 is networked, via a well-known commercially available, local/wide area DATAKIT™ network, to a plurality of other computers of which MXBAU, HXXBY, and HXXBA are representative. These computers can collectively serve hundreds of users. I contemplate that access to these computers from virtually all remote terminals would first require voice confirmation which is advantageously centralized at processor 12. Processor 12 will store voice verification information for the users of the networked computer system. Because of this centralization, logins for users can be switched from one computer to another in the system without the need to provide new voice samples.

More specifically, after establishment of the voice connection from telephone 13, processor 12 first queries the user to provide unique identification information such as a company payroll number. This number if spoken into the telephone by the user will be detected and converted to the proper format by voice apparatus 14 and conveyed to processor 12. Since some accents and speech patterns present formidable problems for presently available speech recognition technology, tone receiver 16, wired in parallel with voice apparatus 14, is also provided to receive the payroll number. Thus, if the number is entered using telephone 13's generating pad, it will be detected by tone receiver 16 and the received numbers conveyed to processor 12. Processor 12 then consults prestored payroll number information to determine whether or not the entered number matches that of an authorized user. If so, processor 12 generates a 4-digit random number (e.g., 5772) and controls voice apparatus 14 to request the user to repeat the 4-digit number into the user telephone 13 (e.g., "After the tone, please speak the following numbers in sequence: five, seven, seven, two").

Processor 12 then compares the speech embodied in the received 4-digit number with the user's stored reference speech for the 4-digit number.

A confidence verification factor indicating the closeness of the match of the received speech patterns with the stored reference patterns is assigned to the received speech. This factor is then compared with a pre-determined threshold value established to identify valid "voice passwords." If the confidence verification factor is greater than the threshold value, processor 12 then uses voice apparatus 14 to apprise the user that access will be granted and to prepare his or her terminal to receive a call back data call from computer HXXBA (i.e., "Access granted, please turn on your terminal to receive callback"). The voice connection to telephone 13 is then dropped since it is no longer needed.

Once the identity of the user is confirmed by voice verification, processor 12 utilizes the DATAKIT network to apprise a computer, here HXXBA, associated with the identified user to establish a data call from the computer to user terminal 11 via the DATAKIT network and the telephone network. User terminal 11, which is depicted as a personal computer, is representative of any peripheral device with a video display, such as a terminal. Computer HXXBA, in response to the initiation of a bidirectional data connection to terminal 11, provides a "LOGIN" prompt to the user at the terminal. The user then enters his or her login which identifies the user, and computer HXXBA then prompts the user to enter a "PASSWORD". A match of the login and password will result in the user at terminal 11 being afforded access to resources in computer HXXBA.

Although the voice connection from control once switch 15 to user telephone 13 is shown as a distinct physical path from the data connection to user terminal 11, it need not be physically separate. Using present ISDN technology, the voice connection and the data connection from switch 15 can be over the same physical medium.

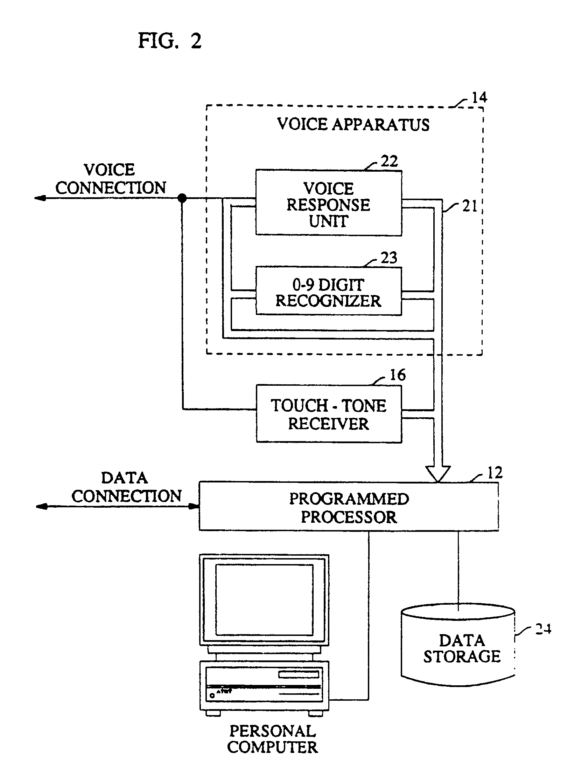

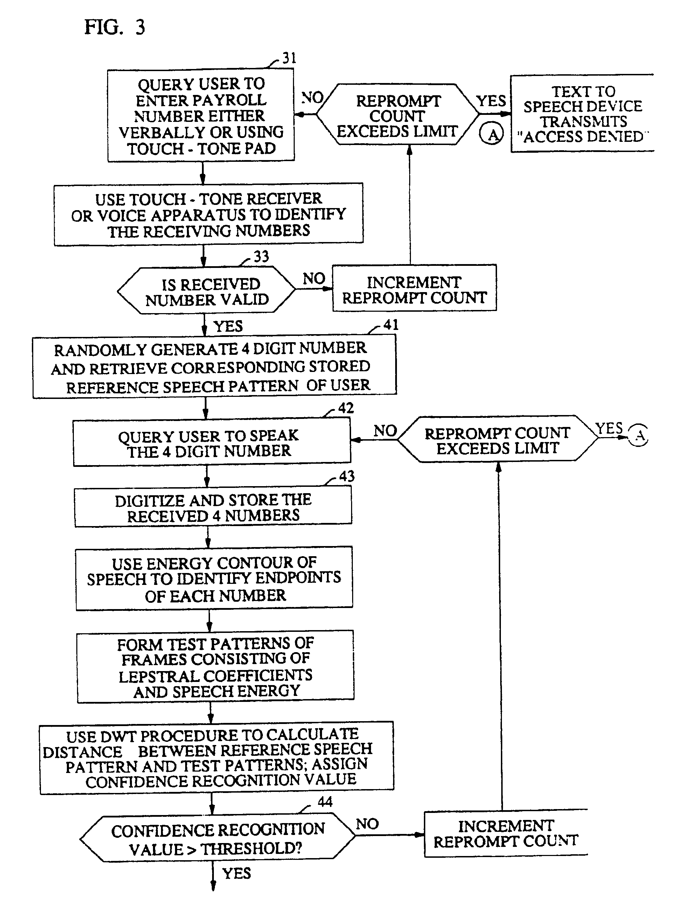

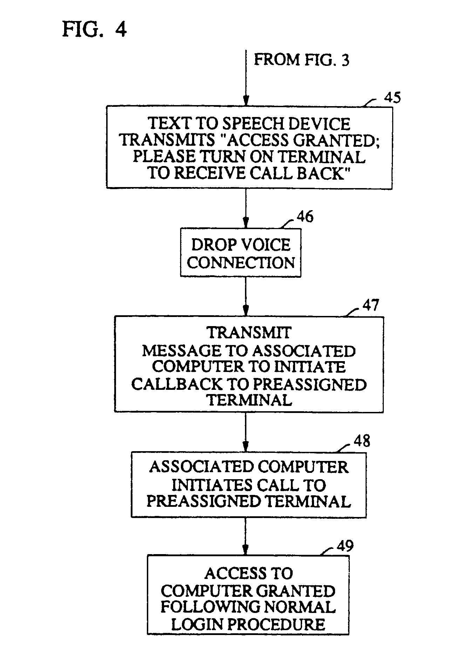

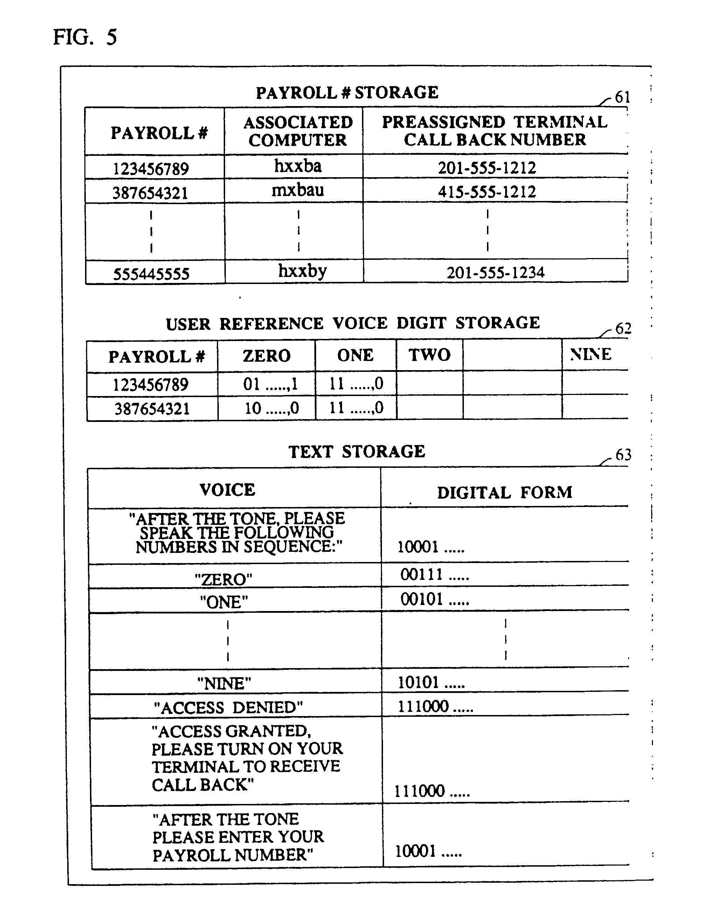

The operation of the illustrative embodiment shown in FIG. 1 will now be described in greater detail with reference to the flow diagram of FIGS. 3 and 4 and the illustrative data shown in FIG. 5. We will assume that the user associated with payroll number 123-45-6789 in FIG. 5 is at user terminal 11 in FIG. 1 and wishes to access computer HXXBA. The user, upon receipt of a dial tone at telephone 13, dials a toll-free number associated with processor 12. Telephone central office switch 15 receives the dialed digits and routes the call to toll-free service box 18. The actual called number associated with the dialed toll-free number is ascertained and then the call is routed directly from telephone central office switch 15 in the normal manner to telephone central office switch 17, which services processor 12. Upon detection of the initiation of a call thereto, processor 12 queries the user, via voice apparatus 14 shown in greater detail in FIG. 2, to enter a payroll number (step 31, FIG. 3).

Voice apparatus 14 comprises voice response unit 22 and digit recognizer 23 – both interconnected by bus 21 and controlled by processor 12. To provide speech output, processor 12 provides stored text in a digital format to voice response unit 22, which using a digital to analog converter generates speech. Typically, phrases such as "access granted ... ", "nine", "after the tone ...", are stored in data storage device 24 in a digital format as shown in table 63 in FIG. 5. Processor 12 generates and provides speech to a user by providing such digital information over bus 21 to voice response unit 22, and controlling unit 22 to output the speech over the voice connection shown in FIG. 2.

More specifically, processor 112 retrieves from data storage 24 the digital equivalent of the phrase "after the tone, please enter your payroll number" shown in text storage 63 in FIG. 5. Voice response unit 22 in FIG. 2 converts the digital information to voice and conveys it over the voice connection to telephone 13. The user then can enter his or her payroll number using the touch tone pad at telephone 13. Entered digits will be detected by touch tone receiver 16 and provided to processor 12.

Alternatively, the user can speak the digits comprising the payroll number. Digits spoken by a user are detected by digit recognizer 23, which includes an analog to digital convertor for conveying the digital information, upon request to processor 12 via bus 21. Digit recognizer 23 in conjunction with processor 12 should, for most people, be able to decipher the spoken digits. Thus, upon receipt of the digital information, processor 12 attempts to ascertain the spoken digits using well known voice verification techniques and, upon ascertaining same (or receiving the digits from touch-tone receiver 16), processor 12 performs a simple table look-up function to determine if the received number matches the payroll number of an authorized user of the computer system (step 33, FIG. 3). Here, the digits entered by the user, namely 123456789, match the same number stored in payroll number storage area 61 in FIG. 5.

Processor 12 randomly generates a 4-digit number (step 41, FIG. 4) and retrieves from data storage 24 the four corresponding stored reference speech digits for the user. If the random number were "9102", processor 12 would retrieve from table 62 in FIG. 6 for user 123-45-6789, the digital information corresponding to "NINE " "ONE" ZERO" and "TWO". Processor 12 also retrieves binary information from table 63 representing the phrase "After the tone, please speak the following number in sequence:" and routes it over bus 21 to voice response unit 22, which converts the binary information to speech. The binary information representing each of the four digits of the randomly chosen number "9102" is also retrieved from table 63 and conveyed in the proper sequence over bus 21 to unit 22 where it is also converted to speech. Thus user 123-45-6789 (step 42, FIG. 4) is asked over the voice connection in FIG. 1 to repeat the digits "9102" into user telephone 13.

User 123-45-6789 then repeats the digits "9102" into telephone 13 for conveyance over the voice connection. Digit recognizer 23 in FIG. 2 digitizes the speech (step 43) and conveys the received speech to processor 12. Processor 12 utilizing a well-known process, uses energy contours of the received speech to identify end points of each number, forms test patterns of frames consisting of cepstral co-efficients and speech energy. A dynamic time warp (DTW) procedure then calculates the distance between the referenced speech pattern for user 123-45-6789, which was retrieved previously, and the received test pattern and assigns a confidence recognition value thereto. If the calculated value is greater than a preset threshold (step 44), processor 12 retrieves the phrase "access granted; please turn on your terminal to receive call-back" from table 63 in FIG. 5, and transmits it via voice response unit 22 to user telephone 13 (step 45). The voice connection is then dropped (step 46, FIG. 4).

Processor 12 utilizes payroll number storage table 61 in FIG. 5 to ascertain that user 123-45-6789 is associated with computer HXXBA and a terminal with telephone number 201-555-1212. Processor 12 then sends a message to computer HXXBA via the DATAKIT network to initiate a data call to the identified telephone number (step 47, FIG. 4). This call is then instituted either over a phone line connected directly to the computer (not shown) or using a DATAKIT node in the normal manner (step 48, FIG. 4). Thus, node 19 in FIG. 1, upon receipt of dial tone from telephone switch 15, dials the number 201-555-1212 and is connected to user terminal 11. The user then logs into computer HXXBA by responding to the login and password prompts (step 49, FIG. 4).

Although the instant embodiment has been described in terms of a randomly selected 4-digit number, the voice-password security system works well with non-numeric phrases. The user reference voice storage 62 in FIG. 5 could, for example, comprise a series of commonly used phrases such as "the" "rain" "in" "Spain" "falls" "mainly" "on" "the" "plain" and "now" "is" "the" "time" "for" "all" "good" "men" "to" "come" "to" "the" "aid" "of" "their" "party". With this vocabulary, the computer could query a user to repeat one of the following phrases:
"The time for Spain is now" or "The men come to the party in Spain" or "rain, men, Party."

It is obvious from the foregoing that the security of a computer system may be substantially enhanced by the described voice password system. While the instant invention has been disclosed with respect to a general purpose computer, it should be understood that such an embodiment is intended to be illustrative of the principles of the invention and that numerous other arrangements, such as a computer system dedicated to a specific use (e.g., automated teller machine functions) may be devised by those skilled in the art without departing from the spirit and scope of the invention.

## Claims

1. A method for controlling access to a resource in response to a request by a person requesting such access comprising

   comparing identity information provided by said person with stored identity information associated with one or more authorized users,
   CHARACTERIZED IN THAT
   said identity information comprises information characteristic of said one or more authorized users' speech, and
   said method further comprises
   prompting said person requesting access to utter a series of sounds,
   comparing sounds received from said person with said stored speech information related to said series of sounds, and
   granting access to said resource by said person requesting access if said comparing indicates a predetermined degree of similarity.

2. The method of claim 1
   CHARACTERIZED IN THAT
   said resource is a computer,
   and
   said granting comprises signaling said computer to grant access.

3. The method of claim 1 further
   CHARACTERIZED IN THAT
   said prompting comprises prompting the prospective user to utter a series of words.

4. The method of claim 3
   CHARACTERIZED IN THAT
   said series of words is a series of randomly selected words.

5. The method of claim 2 further
   CHARACTERIZED IN THAT
   said request originates from a location associated with an authorized user, said location having a communication path from a computer terminal associated with an authorized user to said computer,
   said stored identity information further comprises information identifying said computer terminal, and
   said granting further comprises establishing an operative connection over said communication path connecting said computer to said terminal.

6. The method of claim 1
    CHARACTERIZED IN THAT
    said stored identify information for authorized users comprises identification indicia other than said speech information,
    said prompting is performed in response to said identification indicia, and
    said comparing is accomplished with respect to stored speech information associated with an authorized user having said identification indicia provided in said request.

## FIG. 1

## FIG. 2

FIG. 3

QUERY USER TO ENTER PAYROLL NUMBER EITHER VERBALLY OR USING TOUCH - TONE PAD `31`

REPROMPT COUNT EXCEEDS LIMIT — NO → (back to query) — YES → TEXT TO SPEECH DEVICE TRANSMITS "ACCESS DENIED" (A)

USE TOUCH - TONE RECEIVER OR VOICE APPARATUS TO IDENTIFY THE RECEIVING NUMBERS

IS RECEIVED NUMBER VALID `33` — NO → INCREMENT REPROMPT COUNT

YES

RANDOMLY GENERATE 4 DIGIT NUMBER AND RETRIEVE CORRESPONDING STORED REFERENCE SPEECH PATTERN OF USER `41`

QUERY USER TO SPEAK THE 4 DIGIT NUMBER `42` ← NO — REPROMPT COUNT EXCEEDS LIMIT — YES → (A)

DIGITIZE AND STORE THE RECEIVED 4 NUMBERS `43`

USE ENERGY CONTOUR OF SPEECH TO IDENTIFY ENDPOINTS OF EACH NUMBER

FORM TEST PATTERNS OF FRAMES CONSISTING OF LEPSTRAL COEFFICIENTS AND SPEECH ENERGY

USE DWT PROCEDURE TO CALCULATE DISTANCE BETWEEN REFERENCE SPEECH PATTERN AND TEST PATTERNS; ASSIGN CONFIDENCE RECOGNITION VALUE

CONFIDENCE RECOGNITION VALUE > THRESHOLD? `44` — NO → INCREMENT REPROMPT COUNT

YES

FIG. 4

FROM FIG. 3

TEXT TO SPEECH DEVICE
TRANSMITS "ACCESS GRANTED;
PLEASE TURN ON TERMINAL
TO RECEIVE CALL BACK"
45

DROP VOICE
CONNECTION
46

TRANSMIT
MESSAGE TO ASSOCIATED
COMPUTER TO INITIATE
CALLBACK TO PREASSIGNED
TERMINAL
47

ASSOCIATED COMPUTER
INITIATES CALL TO
PREASSIGNED TERMINAL
48

ACCESS TO
COMPUTER GRANTED
FOLLOWING NORMAL
LOGIN PROCEDURE
49

# FIG. 5

## PAYROLL # STORAGE ⌐61

| PAYROLL # | ASSOCIATED COMPUTER | PREASSIGNED TERMINAL CALL BACK NUMBER |
|---|---|---|
| 123456789 | hxxba | 201-555-1212 |
| 387654321 | mxbau | 415-555-1212 |
| ⋮ | ⋮ | ⋮ |
| 555445555 | hxxby | 201-555-1234 |

## USER REFERENCE VOICE DIGIT STORAGE ⌐62

| PAYROLL # | ZERO | ONE | TWO | | NINE |
|---|---|---|---|---|---|
| 123456789 | 01 .....,1 | 11 .....,0 | | | |
| 387654321 | 10 .....,0 | 11 .....,0 | | | |

## TEXT STORAGE ⌐63

| VOICE | DIGITAL FORM |
|---|---|
| "AFTER THE TONE, PLEASE SPEAK THE FOLLOWING NUMBERS IN SEQUENCE:" | 10001 ..... |
| "ZERO" | 00111 ..... |
| "ONE" | 00101 ..... |
| ⋮ | ⋮ |
| "NINE" | 10101 ..... |
| "ACCESS DENIED" | 111000 ..... |
| "ACCESS GRANTED, PLEASE TURN ON YOUR TERMINAL TO RECEIVE CALL BACK" | 111000 ..... |
| "AFTER THE TONE PLEASE ENTER YOUR PAYROLL NUMBER" | 10001 ..... |